(19)

Europäisches
Patentamt
European
Patent Office
Office européen
des brevets

(11) **EP 2 398 247 A2**

(12) **EUROPEAN PATENT APPLICATION**

(43) Date of publication:
**21.12.2011 Bulletin 2011/51**

(51) Int Cl.:
**H04N 13/02** *(2006.01)*

(21) Application number: **11392005.2**

(22) Date of filing: **20.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.06.2010 KR 20100058791**

(71) Applicant: **Ilst Co., Ltd.
SeongNam-city, Kyunggi-Do (KR)**

(72) Inventors:
• **Burm-Suk, Seo
Gunpo-city
Geyeong-do (KR)**
• **Young-Su, Heo
Incheon (KR)**

(74) Representative: **Schuffenecker, Thierry
120 Chemin de la Maure
06800 Cagnes sur Mer (FR)**

(54) **Method and apparatus for converting 2D image into 3D image**

(57)     A method and an apparatus for converting 2D image into 3D image are disclosed. The method includes converting an input image having pixel values into a brightness image having brightness values, generating a depth map having depth information from the brightness image, and generating at least one of a left eye image, a right eye image and a reproduction image by first parallax-processing the input image using the generated depth map. Here, a pixel value of a delay pixel is substituted for a pixel value of a pixel to be processed at present by considering depth information of N (is integer of above 2) pixels including the pixel to be processed at present in the parallax-processing. In addition, the delay pixel is determined in accordance with arrangement of the depth information of the N pixels, and the delay pixel means a pixel located before the pixel to be processed at present by M (is integer of above 0) pixel.

FIGURE 1

**EP 2 398 247 A2**

## Description

### Technical field

This invention relates generally to image conversions and relates more specifically to a method and an apparatus for converting 2D images into 3D images.

### Background Art

Recently, 3D (three-dimensional) movies such as e.g. Avatar, etc. are booming, and so research for 3D images for 3D movies has actively started. In addition, major firms have produced and sold TV sets enabled for 3D images, and begin to develop 3D image contents.

However, since it takes long time and cost for developing the 3D image contents, few of 3D image contents have been developed at present. Accordingly, a method of converting 2D image into 3D image has been required for solving the period and cost for development of the 3D image contents.

It is a challenge for engineers designing solutions to efficiently convert 2D images to 3D images and to generate more noticeable three-dimensional effects.

### Summary of the invention

A principal object of the present invention is to convert 2D images into 3D images using a parallax-processing rule.

A further object of the invention is to apply plural parallax processing to 2D input images.

In accordance with the objects of this invention a method of converting 2D image into 3D image has been achieved. The method invented comprises steps of: converting an input image having pixel values into a brightness image having brightness values, generating a depth map having depth information from the brightness image, and generating at least one of a left eye image, a right eye image and a reproduction image by first parallax-processing the input image using the generated depth map.

In accordance with the objects of this invention an apparatus for converting 2D image into 3D image has been achieved. The apparatus invented comprises: a brightness conversion section configured to convert a 2D input image having pixel values into a brightness image having brightness values, a depth map section configured to generate a depth map having depth information from the brightness image, and a reproduction image section configured to generate at least one of a left eye image, a right eye image and a reproduction image by first parallax-processing the input image using the generated depth map.

### Description of the drawings

In the accompanying drawings forming a material part of this description, there is shown:

FIG. 1 is a flowchart illustrating a method of converting a 2D image into a 3D image according to a first example embodiment of the present invention.

FIG. 2 is a perspective view illustrating a process of obtaining a sample image according to one example embodiment of the present invention.

FIG. 3 is a view illustrating a process of separating an object according to one example embodiment of the present invention.

FIG. 4 is a flowchart illustrating a method of converting 2D image into 3D image according to a second example embodiment of the present invention.

FIG. 5 is a view a process of separating a boundary according to one example embodiment of the present invention.

FIG. 6 is view illustrating a mask used in synthesizing of an object and noise removing according to one example embodiment of the present invention.

FIG. 7 is a view illustrating result in accordance with the synthesizing of the object and the noise removing according to one example embodiment of the present invention.

**FIG. 8** is a block diagram illustrating an apparatus for converting 2D image into 3D image according to one example embodiment of the present invention.

**Description of the preferred embodiments**

Methods and apparatus for converting 2D images into 3D images using a parallax-processing rule are disclosed. Specially, the invention shows more noticeably a three-dimensional effect by applying plural parallax-processing steps to the 2D input image.

In one aspect, the present invention provides a method of converting 2D image into 3D image comprising: converting an input image having pixel values into a brightness image having brightness values; generating a depth map having depth information from the brightness image; and generating at least one of a left eye image, a right eye image and a reproduction image by first parallax-processing the input image using the generated depth map. Here, a pixel value of a delay pixel is substituted for a pixel value of a pixel to be processed at present by considering depth information of N (is an integer of above 2) pixels including the pixel to be processed at present in the parallax-processing. In addition, the delay pixel is determined in accordance with arrangement of the depth information of the N pixels, and the delay pixel means a pixel located before the pixel to be processed at present by M (is integer of above 0) pixel.

The right eye image is delayed in the right direction for only the background area to apply positive parallax to the first pixel; the left eye image is delayed in the left direction for only the object area to apply negative parallax to the second pixel.

The method further comprises generating the left eye image or the right eye image by second parallax processing after the first parallax processing the input image using the depth map. Here, a pixel value of a delay pixel is substituted for a pixel value of a pixel to be processed at present by considering depth information of N pixels including the pixel to be processed at present in the second parallax processing. Additionally, the delay pixel in the second parallax processing is determined in accordance with arrangement of the depth information of the N pixels, and a value of the delay pixel in the second parallax processing is higher than that in the first parallax-processing.

A first parallax-processing rule for selecting the delay pixel when parallax-processing to the left eye image is different from a second parallax-processing rule for selecting the delay pixel when parallax-processing to the right eye image in view of the same arrangement of the depth information.

The depth information has 0 or 1, and the input image is parallax-processed in accordance with arrangement of four depth information.

The step of converting the input image includes: converting pixel values of pixels in the input image into brightness values. The step of generating the depth map includes: sampling pixels in the brightness image with constant interval, thereby generating a sample image; calculating total average brightness $\mu_{TOTAL}$ of the sample image; dividing the sample image into an upper part and a lower part, and calculating average brightness $\mu_{PART}$ of the upper part; and generating the depth information for the pixels in the input image by using the total average brightness $\mu_{TOTAL}$ and the average brightness $\mu_{PART}$ of the upper part. Here, under the condition that the total average brightness $\mu_{TOTAL}$ is more than the average brightness $\mu_{PART}$, the depth information of the pixel is 0 in case that brightness $S_Y(i,j)$ of the pixel is more than the total average brightness $\mu_{TOTAL}$, and is 1 in case that the brightness $S_Y(i,j)$ of the pixel is smaller than the total average brightness $\mu_{TOTAL}$. Furthermore, under the condition that the total average brightness $\mu_{TOTAL}$ is smaller than the average brightness $\mu_{PART}$, the depth information of the pixel is 0 in case that brightness $S_Y(i,j)$ of the pixel is smaller than the total average brightness $\mu_{TOTAL}$, and is 1 in case that the brightness $S_Y(i,j)$ of the pixel is more than the total average brightness $\mu_{TOTAL}$.

The step of generating the depth map further includes: in case that brightness difference between a specific pixel and next pixel is higher than preset level, setting the depth information of every pixel located after the specific pixel by D (is positive integer) pixels to 0 or 1.

The step of generating the depth information includes: dividing the depth information having 0 or 1 into 0, 1, 2, and 3; smoothing depth information having 0, 1, 2 and 3 using a mask; and resetting depth information of a pixel having the depth information between 0 and 1.5 to 0 and resetting depth information of a pixel having the depth information between 1.5 and 3 to 1.

Depth information corresponding to a caption in the input image is reset to 1 only in case that the depth information having 1 is successively arrayed by above preset number.

In another aspect, the present invention provides a method of converting 2D image into 3D image comprising: generating a depth map made up of depth information having 0 or 1 from a 2D input image using brightness of pixels in the input image; and generating a left eye image or a right eye image by parallax-processing the input image through the generated depth map. Here, a first pixel when parallax-processing to the right eye image is delayed in the right direction by applying positive parallax to the first pixel, and a second pixel when parallax-processing to the left eye image is delayed in the left direction by applying negative parallax to the second pixel.

A pixel value of a delay pixel is substituted for a pixel value of a pixel to be processed at present by considering depth information of N (is integer of above 2) pixels including the pixel to be processed at present in the parallax processing. In addition, the delay pixel is determined in accordance with arrangement of the depth information of the N pixels, and the delay pixel means a pixel located before the pixel to be processed at present by M (is an integer of above 0) pixel.

A first parallax-processing rule for selecting the delay pixel when the parallax processing to the left eye image is different from a second parallax-processing rule for selecting the delay pixel when the parallax-processing to the right eye image in view of the same arrangement of the depth information. Moreover, the input image is parallax-processed in accordance with the arrangement of the depth information for the N pixels.

The step of generating the depth map includes: converting pixel values of pixels in the input image into brightness values; sampling pixels in the brightness image with constant interval, thereby generating a sample image; calculating total average brightness $\mu_{TOTAL}$, of the sample image; dividing the sample image into an upper part and a lower part, and calculating average brightness $\mu_{PART}$ of the upper part; and generating the depth information for the pixels in the input image by using the total average brightness $\mu_{TOTAL}$ and the average brightness $\mu_{PART}$ of the upper part. Here, under the condition that the total average brightness $\mu_{TOTAL}$ is more than the average brightness $\mu_{PART}$, the depth information of the pixel is 0 in case that brightness $S_Y(i,j)$ of the pixel is more than the total average brightness $\mu_{TOTAL}$, and is 1 in case that the brightness $S_Y(i,j)$ of the pixel is smaller than the total average brightness $\mu_{TOTAL}$. Additionally, under the condition that the total average brightness $\mu_{TOTAL}$ is smaller than the average brightness $\mu_{PART}$, the depth information of the pixel is 0 in case that brightness $S_Y(i,j)$ of the pixel is smaller than the total average brightness $\mu_{TOTAL}$, and is 1 in case that the brightness $S_Y(i,j)$ of the pixel is more than the total average brightness $\mu_{TOTAL}$.

The step of generating the depth map further includes: in case that brightness difference between a specific pixel and next pixel is higher than preset level, setting the depth information of every pixel located after the specific pixel by D (is a positive integer) pixels to 0 or 1; dividing the depth information having 0 or 1 into 0, 1, 2, and 3; smoothing depth information having 0, 1, 2 and 3 using a mask; and resetting depth information of a pixel having the depth information between 0 and 1.5 to 0 and resetting depth information of a pixel having the depth information between 1.5 and 3 to 1.

Depth information corresponding to a caption in the input image is reset to 1 only in case that the depth information having 1 is successively arrayed by above preset number.

In still another aspect, the present invention provides an apparatus for converting 2D image into 3D image comprising: a brightness conversion section configured to convert a 2D input image having pixel values into a brightness image having brightness values; a depth map section configured to generate a depth map having depth information from the brightness image; and a reproduction image section configured to generate at least one of a left eye image, a right eye image and a reproduction image by first parallax-processing the input image using the generated depth map. Here, the reproduction image section delays a first pixel in the right direction by applying positive parallax to the first pixel when parallax-processing the right eye image, and delays a second pixel in the left direction by applying negative parallax to the second pixel when parallax-processing the left eye image.

The reproduction image section substitutes pixel value of a delay pixel for a pixel value of a pixel to be processed at present by considering depth information of N (is an integer of above 2) pixels including the pixel to be processed at present in the parallax-processing. Furthermore, the delay pixel is determined in accordance with arrangement of the depth information of the N pixels, and the delay pixel means a pixel located before the pixel to be processed at present by M (is integer of above 0) pixel.

A first parallax-processing rule for selecting the delay pixel when the parallax processing to the left eye image is different from a second parallax-processing rule for selecting the delay pixel when the parallax-processing to the right eye image in view of the same arrangement of the depth information. In addition, the input image is parallax-processed in accordance with the arrangement of the depth information for the N pixels.

The brightness conversion section converts pixel values of pixels in the input image into brightness values. The depth map section includes: a sampling section configured to sample pixels in the brightness image with constant interval, thereby generating a sample image; a brightness calculation section configured to calculate total average brightness $\mu_{TOTAL}$ of the sample image, divide the sample image into an upper part and a lower part, and calculate average brightness $\mu_{PART}$ of the upper part; and a depth map generating section configured to generate the depth information for the pixels in the input image by using the total average brightness $\mu_{TOTAL}$ and the average brightness $\mu_{PART}$ of the upper part. Here, under the condition that the total average brightness $\mu_{TOTAL}$ is more than the average brightness $\mu_{PART}$, the depth information of the pixel is 0 in case that brightness $S_Y(i,j)$ of the pixel is more than the total average brightness $\mu_{TOTAL}$, and is 1 in case that the brightness $S_Y(i,j)$ of the pixel is smaller than the total average brightness $\mu_{TOTAL}$. Additionally, under the condition that the total average brightness $\mu_{TOTAL}$ is smaller than the average brightness $\mu_{PART}$, the depth information of the pixel is 0 in case that brightness $S_Y(i,j)$ of the pixel is smaller than the total average brightness $\mu_{TOTAL}$, and is 1 in case that the brightness $S_Y(i,j)$ of the pixel is more than the total average brightness $\mu_{TOTAL}$.

The depth map generating section sets the depth information of pixels located after a specific pixel by D (is a positive integer) pixel to 0 or 1 in case that brightness difference between the specific pixel and next pixel is higher than preset level.

The depth map generating section divides the depth information having 0 or 1 into 0, 1, 2, and 3, smoothes depth information having 0, 1, 2 and 3 using a mask, resets depth information of a pixel having the depth information between 0 and 1.5 to 0, and resets depth information of a pixel having the depth information between 1.5 and 3 to 1.

The depth map generating section resets depth information corresponding to a caption in the input image to 1 only in case that the depth information having 1 is successively arrayed by above preset number.

A method of the present invention converts a 2D (two-dimensional) input image, e.g., RGB image into a 3D (three-dimensional) image, and generates a reproduction image from the 2D input image.

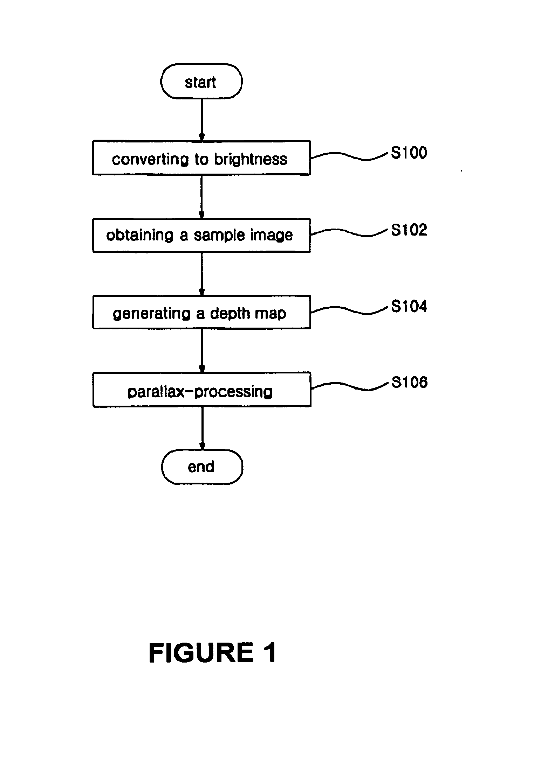

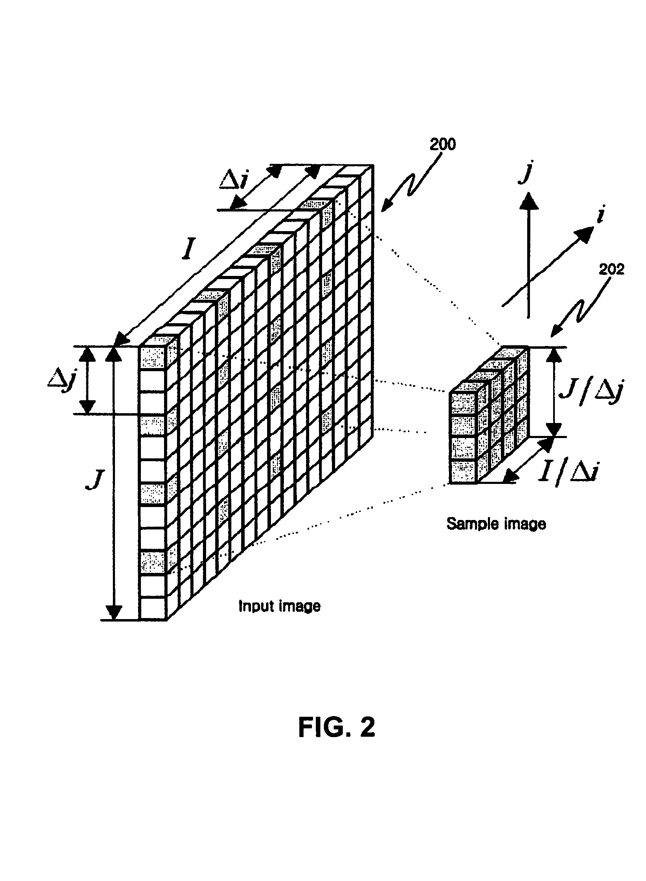

**FIG. 1** is a flowchart illustrating a method of converting a 2D image into a 3D image according to a first example embodiment of the present invention, and **FIG. 2** is a perspective view illustrating a process of obtaining a sample image according to one example embodiment of the present invention.

In **FIG. 1,** the method of the present invention converts pixel values of pixels in the 2D input image into brightness values in step of **S100**.

Generally, various coordinate systems such as CMY color coordinate system, RGB color coordinate system, HIS color coordinate system, YUV color coordinate system, etc., are used as a color coordinate system. The present invention may use optionally the color coordinate systems, but assumes the color coordinate system as the RGB color coordinate system or the YUV color coordinate system for the purpose of convenience of description. The invention could be applied to any other color space as well.

In accordance with the above color coordinate system, the pixel values of the pixels in the input image are converted into the brightness values through **equation 1** below:

## Equation 1:

$$s_T(i,j) = \sum_{k_1=1}^{I}\sum_{k_2=1}^{J}\left([0.299 \quad 0.587 \quad 0.114]\cdot\begin{bmatrix} s_R(k_1,k_2)\delta(i-k_1,j-k_2) \\ s_G(k_1,k_2)\delta(i-k_1,j-k_2) \\ s_B(k_1,k_2)\delta(i-k_1,j-k_2) \end{bmatrix}\right)$$

wherein $S_Y(i,j)$ means the converted brightness value, and $S_R(i,j)$, $S_G(i,j)$ and $S_B(i,j)$ indicate brightness values of R, G and B included in the input image, respectively. In addition, $\delta(i,j)$ is an impulse signal of unit sample.

As shown in **equation 1,** the pixel values of the pixels in the input image are converted into the brightness values, i.e., the input image is converted into a brightness image **200** defined with the brightness values, as shown in **Fig. 2.**

In step **S102,** the method of converting the 2D image obtains a sample image **202** by sampling the pixels in the brightness image 200 as shown in **FIG. 2** considering complexity of the hardware for effective calculation and real processing of motion parallax. As a result, the sample image **202** includes also pixels having a brightness value.

In one example embodiment of the present invention, the method of converting 2D image may sample the pixels in the brightness image **200** with constant interval as shown in **FIG. 2** so that the sample image **202** can represent the brightness image **200**. Here, the brightness distribution characteristic of the sample image **202** is identical to that of the brightness image **200**. That is, average and standard deviation of a histogram for the sample image **202** are the same as those of a histogram for the brightness image **200**. On the other hand, the number of the pixels to be sampled is not limited.

In step of **S104,** the method generates a depth map for the input image using the sample image **202.**

In step of **S106,** a parallax-process of the input image is performed by using the generated depth map of step **S104,** thereby generating the reproduction image.

Hereinafter, the steps of **S104** and **S106** will be described with reference to accompanying drawings.

Firstly, the step of **S104** will be described in detail.

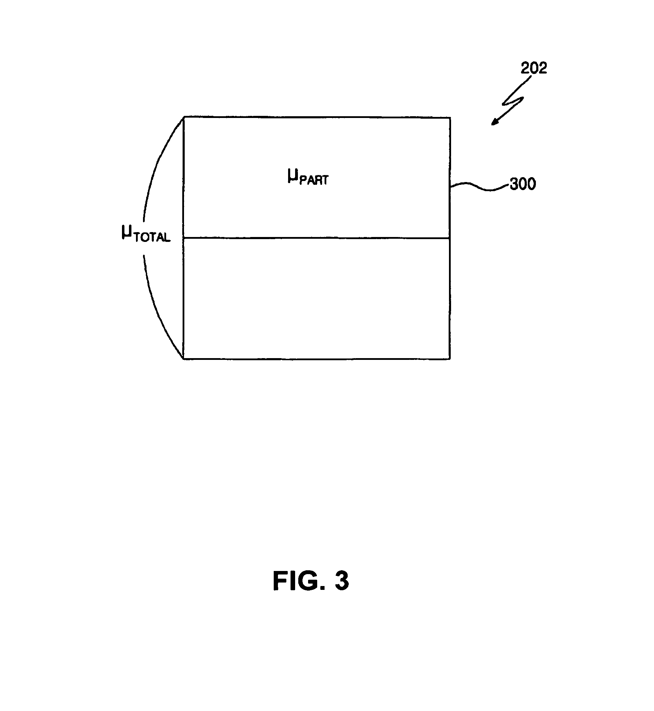

**FIG. 3** is a view illustrating a process of separating an object according to one example embodiment of the present invention. Here, it is assumed that the object is located at comparative long distance in case the vertical dimension of the object is high, and it is assumed that it is located at comparative short distance in case the vertical dimension of the object is low.

The method of converting a 2D image of the present invention divides the sample image **202,** as shown in **Fig. 2,** into an upper part 300 and a lower part as shown in FIG. 3 so as to separate the object. Then, the method calculates a total average brightness $\mu_{TOTAL}$ of the sample image **202** and an average brightness $\mu_{PART}$ of the upper part **300.**

On the other hand, in case that the brightness values $S_Y$ of the pixels in the input image 200 vary across a boundary between the total average brightness $\mu_{TOTAL}$ and the average brightness $\mu_{PART}$ of the upper part 300, depth information of the depth map is rapidly changed, and so flickering of a screen may occur. Accordingly, the method resets the brightness values as shown in following **Equation 2** and **Equation 3** in order to prevent the above flickering, i.e. quantization of the brightness level is performed to avoid flicker when generating the depth map. Hereinafter, the brightness is assumed to have 256 levels.

## Equation 2:

$$S_Y = 224 \text{ at } S_Y \geq 224$$

$$S_Y = 192 \text{ at } 192 \leq S_Y < 224$$

$$S_Y = 160 \text{ at } 160 \leq S_Y < 192$$

$$S_Y = 128 \text{ at } 128 \leq S_Y < 160$$

$$S_Y = 96 \text{ at } 96 \leq S_Y < 128$$

$$S_Y = 64 \text{ at } 64 \leq S_Y < 96$$

$$S_Y = 32 \text{ at } 32 \leq S_Y < 64$$

$$S_Y = 16 \text{ at } S_Y < 32$$

## Equation 3:

$$\mu_{TOTAL} = 224 \text{ at } \mu_{TOTAL} \geq 224$$

$$\mu_{TOTAL} = 192 \text{ at } 192 \leq \mu_{TOTAL} < 224$$

$$\mu_{TOTAL} = 160 \text{ at } 160 \leq \mu_{TOTAL} < 192$$

$$\mu_{TOTAL} = 128 \text{ at } 128 \leq \mu_{TOTAL} < 160$$

$$\mu_{TOTAL} = 96 \text{ at } 96 \leq \mu_{TOTAL} < 128$$

$$\mu_{TOTAL} = 64 \text{ at } 64 \leq \mu_{TOTAL} < 96$$

$$\mu_{TOTAL} = 32 \text{ at } 32 \leq \mu_{TOTAL} < 64$$

$$\mu_{TOTAL} = 16 \text{ at } \mu_{TOTAL} < 32$$

Subsequently, the method generates the depth map having depth information by using the total average brightness $\mu_{TOTAL}$ and the average brightness $\mu_{PART}$ of the upper part **300**.

In one example embodiment of the present invention, the method sets depth information of the pixel corresponding to the object to 0, and sets depth information of the pixel corresponding to a background to 1.

Particularly, under the condition that the total average brightness $\mu_{TOTAL}$ is more than the average brightness $\mu_{PART}$ of the upper part 300, i.e. $\mu_{TOTAL} \geq \mu_{PART}$, the method of converting 2D image sets the depth information of corresponding pixel to 0 in case that the brightness of the pixel $S_Y(i,j)$ is more than the total average brightness $\mu_{TOTAL}$, i.e. $S_Y(i,j) \geq \mu_{TOTAL}$, and sets the depth information of corresponding pixel to 1 in case that that the brightness of the pixel $S_Y(i,j)$ is smaller than the total average brightness $\mu_{TOTAL}$, i.e. $S_Y(i,j) < \mu_{TOTAL}$. Additionally, under the condition that the total average brightness $\mu_{TOTAL}$ is smaller than the average brightness $\mu_{PART}$ of the upper part 300, i.e. $\mu_{TOTAL} < \mu_{PART}$, the method sets the depth information of corresponding pixel to 0 in case that the brightness of the pixel $S_Y(i,j)$ is smaller than the total average brightness $\mu_{TOTAL}$, i.e. $S_Y(i,j) < \mu_{TOTAL}$, and sets the depth information of corresponding pixel to 1 in case that that the brightness of the pixel $S_Y(i,j)$ is more than the total average brightness $\mu_{TOTAL}$, i.e. $S_Y(i,j) \geq \mu_{TOTAL}$.

The method of converting 2D image applies the above depth information setting method to every pixel in the input image, thereby generating the depth map. As a result, the depth map is made up of the depth information having 0 or 1. In another example embodiment of the present invention, the depth information of the depth map may have further 2, 3, etc., as described below.

Next, the step of **S106** will be described in detail.

In one example embodiment of the present invention, the input image is parallax-processed using the generated depth map, thereby generating a left eye image and a right eye image.

In one example embodiment of the present invention, the method may delay a corresponding pixel in the right direction by applying positive parallax to the pixel when parallax-processing to the right eye image, and delay corresponding a pixel in the left direction by applying negative parallax to the pixel when parallax-processing to the left eye image.

In another example embodiment of the present invention, the method substitutes a pixel value of a delay pixel for a pixel value of the pixel to be processed at present considering the depth information of N pixels including the pixel to be processed at present when parallax-processing, wherein the N is an integer more than 2. Here, the delay pixel is determined in accordance with arrangement of the depth information of N pixels, and means a pixel located before the pixel to be processed at present by M (is an integer higher than 0) pixel.

In still another example embodiment of the present invention, the method applies the positive parallax to corresponding pixel in case that final depth information of the depth information for N pixels is 1, thereby delaying the pixel in the right direction. Furthermore, the method applies the negative parallax to corresponding pixel in case that the final depth information is 0, thereby delaying the pixel in the left direction.

Hereinafter, the method of processing parallax will be described in detail with following examples. Here, N is assumed as 4.

[Table 1] Parallax-processing rule for left eye image

| Depth map | Delay pixel |
| --- | --- |
| 1110 | delay 2 |
| 1100 | delay 3 |
| 0010 | delay 4 |
| default | delay 1 |

[Table 2] Parallax-processing rule for right eye image

| Depth map | Delay pixel |
| --- | --- |
| 0001 | delay 2 |
| 0011 | delay 3 |
| 1111 | delay 4 |
| default | delay 1 |

[Table 3] Result in accordance with the parallax processing

| Input image | D1 | D2 | D3 | D4 | D5 | D6 | D7 |
| --- | --- | --- | --- | --- | --- | --- | --- |
| | 1 | 1 | 1 | 1 | 0 | 0 | 0 |
| Left eye image | - | - | - | D4 delay1 | D4 delay2 | D4 delay3 | D7 delay1 |
| Right eye image | - | - | - | D1 Delay4 | D5 delay1 | D6 delay1 | D7 delay1 |
| Reproduction image | - | - | - | D4 | D5 | D4 | D7 |

Referring to **Table 1** and **Table 3**, in case that depth information '1111' is inputted, depth information of delay 1 as default is substituted for a depth information of D4 in accordance with the parallax-processing rule for left eye image. Here, the delay 1 indicates a pixel processed at present, i.e. a pixel corresponding to D4. In other words, in case that depth information '1111' is inputted, the pixel value of D4 is maintained.

Referring to a pixel D5, depth information of successive four pixels including the D5 is '1110'. In accordance with the parallax-processing rule for left eye image, depth information of delay 2 is substituted for depth information of the D5. Here, the delay 2 means a pixel next to the D5 in the left direction, and so the pixel value of the D4 is substituted for the pixel value of D5.

Referring to a pixel D6, depth information of successive four pixels including the D6 is '1100'. In accordance with the parallax-processing rule for left eye image, depth information of delay 3 is substituted for depth information of the D6. Here, the delay 3 indicates a pixel before the D5 in the left direction by two pixels, and thus the pixel value of the D4 is substituted for the pixel value of D6.

In brief, the left eye image is generated through the above-mentioned method. On the other hand, the right eye image is generated in accordance with parallax-processing rule of the right eye image shown in **Table 2** like the process of generating the left eye image.

In one example embodiment of the present invention, in the reproduction image, pixel values of the pixels may have in turn pixel value of the left eye image and pixel value of the right eye image as shown in **Table 3**. Accordingly, output of the reproduction image has the same effect as when the left eye image and the right eye image are outputted alternatively. That is, 3D image is realized by outputting the reproduction image.

In another example embodiment of the present invention, the method of converting 2D may output in turn the left eye image and the right eye image without generating extra reproduction image, thereby outputting the 3D image.

In short, the method of the present invention generates the depth map having the depth information (e.g. 0 or 1), and generates the left eye image and the right eye image by parallax-processing the input image in accordance with the arrangement of the depth information in the depth map and the parallax-processing rules of the left eye image and the right eye image. In the parallax-processing rules, delay values of the pixels are determined in accordance with the arrangement of the depth information.

In above description, N is assumed as 4, but may be set to have another value.

In another example embodiment of the present invention, the method of converting 2D may perform a plurality of parallax-processing processes.

For example, the method may perform the parallax processing at the first (hereinafter, referred to as "first parallax-processing) as mentioned above, and then perform further a parallax processing at the second (hereinafter, referred to as "second parallax-processing).

The second parallax processing is similar to the first parallax processing. However, parallax-processing rule employed in the second parallax processing may be different from that in the first parallax processing. In one example embodiment of the present invention, a delay value in the parallax-processing rule for the second parallax processing may be higher than that in the parallax-processing rule for the first parallax-processing. For instance, the delay value for depth information '1110' in the first parallax processing may be 2, and be 3 in the second parallax processing.

If two-parallax processing is performed as described above, three-dimensional effect of the 3D image may be more noticeably shown than that in one parallax processing.

On the other hand, three parallax processing, four parallax processing, etc. may be performed. In this case, to show more noticeably the three-dimensional effect of the 3D image, the more number of the parallax processing is increased, the higher the delay value is.

In one example embodiment of the present invention, the method of converting 2D may further include additional step so as to process a caption. Generally, the caption in a screen is made up of a few of pixels, and so the caption may be broken if only the above parallax processing is performed. Accordingly, to solve broken problem of the caption, the method of the present invention may set corresponding depth information to 1 only in case that depth information having 1 is successively arrayed by above preset number, otherwise set corresponding depth information to 0.

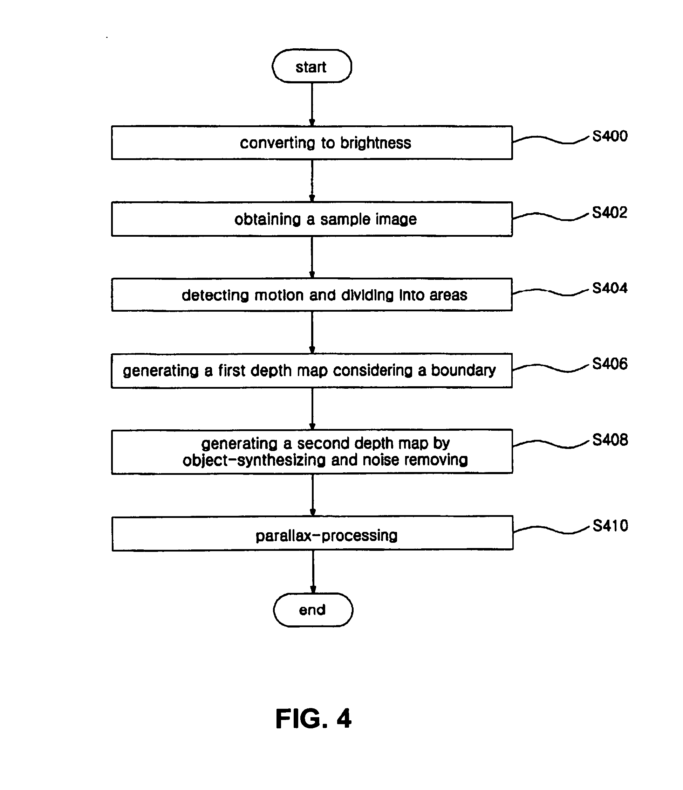

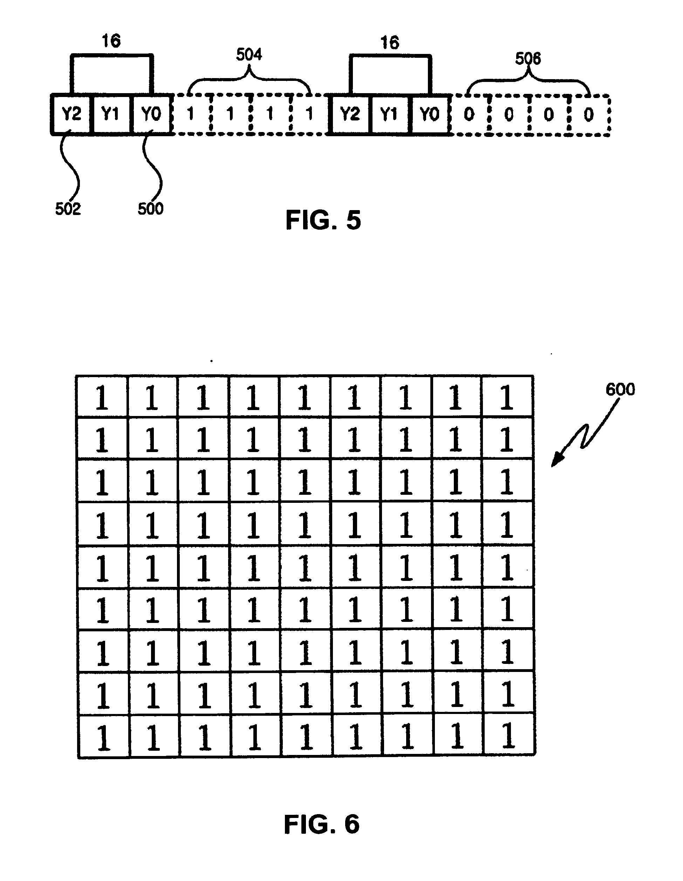

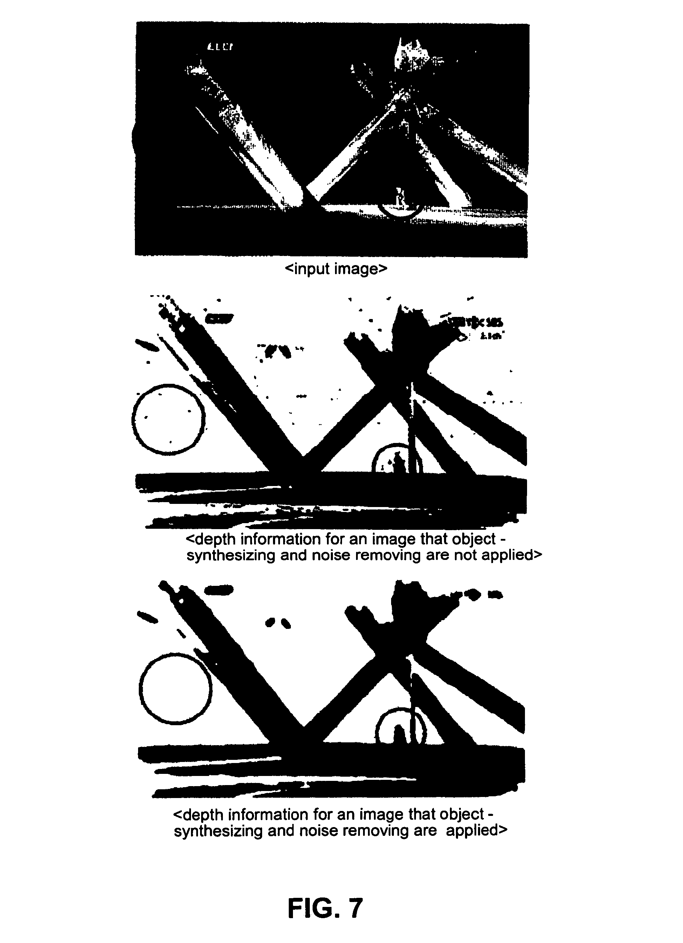

**FIG. 4** is a flowchart illustrating a method of converting 2D image into 3D image according to a second example embodiment of the present invention, and **FIG. 5** is a view a process of separating a boundary according to one example embodiment of the present invention. **FIG. 6** is view illustrating a mask used in synthesizing of an object and noise-removing according to one example embodiment of the present invention, and **FIG. 7** is a view illustrating result in accordance with the synthesizing of the object and the noise-removing according to one example embodiment of the present invention.

In **FIG. 4,** the method of converting 2D converts pixel values of pixels in an input image into brightness values, thereby generating a brightness image in step of **S400.**

In step of **S402,** the method obtains a sample image by sampling the brightness image.

In step of **S404,** the method detects motion of the sample image, and divides the input image into plural areas.

In step of **S406,** the method generates a first depth map with consideration of a boundary.

In step of **S408,** the method generates a second depth map by applying an object-synthesizing step and a noise-removing step to the first depth map. Here, the second depth map may correspond to the depth map in the first embodiment.

In step of **S410,** the method parallax-processes the input image using the generated second depth map, thereby generating a 3D image.

In above description, the other steps except S406 and **S408** are the same as in the first embodiment, and thus any further description concerning the same steps will be omitted.

Hereinafter, the step of **S406** will be described in detail.

The method of the present invention divides the input image into the areas on the basis of brightness as described above. However, since boundary section in the input image is not clear, objects may not be accurately separated. Accordingly, the method of the present invention may further include following extra step for clearing the boundary section.

Referring to **FIG. 5,** in case that brightness difference between adjacent pixels 500 and 502 is higher than preset level, every pixel 504 or 506 located after the pixel 500 by K (is a positive integer) pixels may be set to have 0 or 1.

For example, the pixels 504 may be set to have 1 in case that Y2 is higher than (Y0+16), and be set to have 0 in case that (Y2+16) is smaller than Y0.

That is, a section at which brightness is suddenly changed is assumed as the boundary section, and thus the method of converting 2D performs the above steps about the section at which brightness is suddenly changed so as to clear the boundary section.

Hereinafter, the step of **S408** will be described in detail.

In one example embodiment of the present invention, the method separates depth information having 0 and 1 in the first depth map into depth information having 0, 1, 2 and 3. However, value of the depth information is not limited as 0, 1, 2, 3, and may be variously modified.

For example, under the condition that $S_Y$ is smaller than $\mu_{TOTAL}$ ($S_Y < \mu_{TOTAL}$), the method sets the depth information to 0 in case that $S_Y$ is smaller than ($\mu_{TOTAL}$ /2) and sets the depth information to 1 in case that $S_Y$ is higher than ($\mu_{TOTAL}$ /2).

In addition, under the condition that $S_Y$ is more than $\mu_{TOTAL}$ ($S_Y \geq \mu_{TOTAL}$), the method sets the depth information to 2 in case that $S_Y$ is smaller than ((255+ $\mu_{TOTAL}$)/2) and sets the depth information to 3 in case that $S_Y$ is higher than ((255+ $\mu_{TOTAL}$)/2).

Subsequently, the method smoothes the second depth map using a mask 600 shown in **FIG. 6.** For instance, the method resets the depth information of a pixel having the depth information between 0 and 1. 5 to 0, and resets the depth information of a pixel having depth information between 1.5 and 3 to 1. As a result, the second depth map is also made up of the depth information having 0 and 1 like the first depth map.

Referring to experimental result in **FIG. 7,** an image, generated by applying the object-synthesizing and the noise-removing to the first depth map, reflects much better the input image than that that for which the object-synthesizing and the noise-removing is not applied. Additionally, in the image generated by applying the object-synthesizing and the noise removing to the first depth map, the boundary section, etc. is distinctly shown.

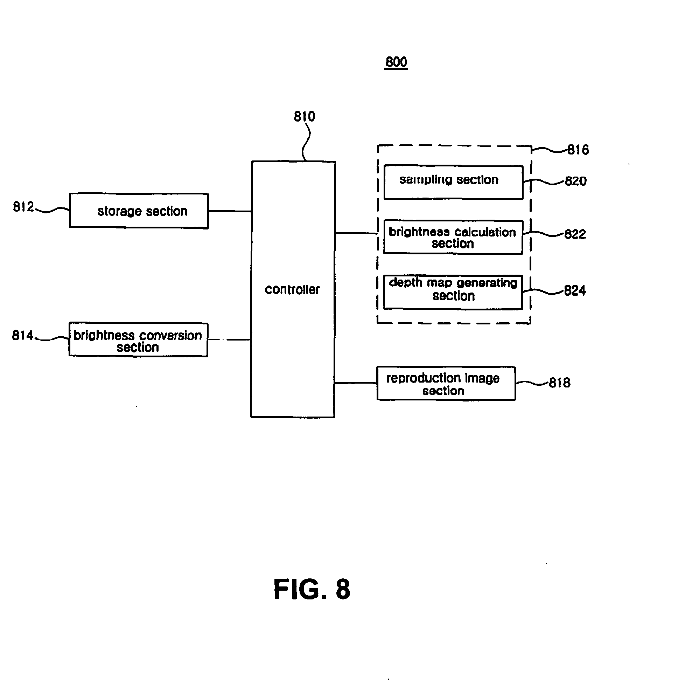

**FIG. 8** is a block diagram illustrating an apparatus for converting 2D image into 3D image according to one example embodiment of the present invention.

In **FIG. 8,** the apparatus **800** for converting 2D image into 3D image of the present invention includes a controller **810,** a storage section **812,** a brightness conversion section **814,** a depth map section 816 and a reproduction image section **818.**

The storage section **812** stores the input image, which is an original image, and may store the left eye image, the right eye image or the reproduction image generated by parallax-processing the input image.

The brightness conversion section **814** converts the pixel values of the pixels in the input image into brightness values, thereby generating the brightness image.

The depth map section **816** parallax-processes the input image, and includes a sampling section **820,** a brightness calculation section **822** and a depth map generating section **824.**

The sampling section **820** samples the brightness image, thereby generating the sample image.

The brightness calculation section **822** calculates the total average brightness $\mu_{TOTAL}$ of the sample image and the average brightness $\mu_{PART}$ of the upper part **300.**

The depth map generating section **824** generates the depth map for the input image using the total average brightness $\mu_{TOTAL}$ and the average brightness $\mu_{PART}$.

In another example embodiment of the present invention, the depth map generating section **824** may further processes distinctly the boundary section in the input image, and then generate the depth map.

In still another example embodiment of the present invention, the depth map generating section **824** divides the depth information having 0 or 1 into 0, 1, 2 or 3, etc., and then generates new depth map by smoothing the depth map including the depth information having 0, 1, 2 or 3, etc. using the mask.

In still another example embodiment of the present invention, the depth map generating section **824** may perform extra step to the caption.

The reproduction image section **818** parallax-processes the input image by using the depth map, thereby generating the left eye image, the right eye image or the reproduction image.

The controller **810** controls wholly elements in the apparatus **800.**

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Parallax-processes

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A method of converting 2D image into 3D image comprising:

   - converting an input image having pixel values into a brightness image having brightness values;
   - generating a depth map having depth information from the brightness image; and
   - generating at least one of a left eye image, a right eye image and a reproduction image by first parallax processing the input image using the generated depth map.

2. The method of claim 1 wherein said first parallax-processing comprises a substitution of a pixel value of a delay pixel for a pixel value of a pixel to be processed at present by considering depth information of N (is an integer of above 2) pixels including the pixel to be processed at present in the parallax-processing, and wherein the delay pixel is determined in accordance with arrangement of the depth information of the N pixels, and the delay pixel means a pixel located before the pixel to be processed at present by M (is integer of above 0) pixel.

3. The method of claim 2, wherein the right eye image is delayed in the right direction for only a background area to apply positive parallax to the first pixel, and the left eye image is delayed in the left direction for only an object area to apply negative parallax to the second pixel.

4. The method of claim 2, further comprising:

   - generating the left eye image or the right eye image by second parallax-processing after the first parallax-processing the input image using the depth map, wherein a pixel value of a delay pixel is substituted for a pixel value of a pixel to be processed at present by considering depth information of N pixels including the pixel to be processed at present in the second parallax-processing, and wherein the delay pixel in the second parallax-processing is determined in accordance with arrangement of the depth information of the N pixels, and a value of the delay pixel in the second parallax-processing is higher than that in the first parallax-processing.

5. The method of claim 2, wherein a first parallax-processing rule for selecting the delay pixel when parallax-processing to the left eye image is different from a second parallax-processing rule for selecting the delay pixel when parallax-processing to the right eye image in view of the same arrangement of the depth information.

6. The method of claim 5, wherein the depth information has 0 or 1, and the input image is parallax-processed in accordance with arrangement of four depth information.

7. The method of claim 1, wherein the step of converting the input image includes:

- converting pixel values of pixels in the input image into brightness values, and the step of generating the depth map includes:
- sampling pixels in the brightness image with constant interval, thereby generating a sample image;
- calculating total average brightness $\mu_{TOTAL}$ of the sample image;
- dividing the sample image into an upper part and a lower part, and calculating average brightness $\mu_{PART}$ of the upper part; and
- generating the depth information for the pixels in the input image by using the total average brightness $\mu_{TOTAL}$ and the average brightness $\mu_{PART}$ of the upper part, wherein under the condition that the total average brightness $\mu_{TOTAL}$ is more than the average brightness $\mu_{PART}$, the depth information of the pixel is 0 in case that brightness $S_Y(i,j)$ of the pixel is more than the total average brightness $\mu_{TOTAL}$, and is 1 in case that the brightness $S_Y(i,j)$ of the pixel is smaller than the total average brightness $\mu_{TOTAL}$, under the condition that the total average brightness $\mu_{TOTAL}$ is smaller than the average brightness $\mu_{PART}$, the depth information of the pixel is 0 in case that brightness $S_Y(i,j)$ of the pixel is smaller than the total average brightness $\mu_{TOTAL}$, and is 1 in case that the brightness $S_Y(i,j)$ of the pixel is more than the total average brightness $\mu_{TOTAL}$.

8. The method of claim 7, wherein the step of generating the depth map further includes: in case that brightness difference between a specific pixel and next pixel is higher than preset level, setting the depth information of every pixel located after the specific pixel by D (is positive integer) pixels to 0 or 1.

9. The method of claim 7, wherein the step of generating the depth information includes:

   - dividing the depth information having 0 or 1 into 0, 1, 2, and 3;
   - smoothing depth information having 0, 1, 2 and 3 using a mask; and
   - resetting depth information of a pixel having the depth information between 0 and 1.5 to 0 and resetting depth information of a pixel having the depth information between 1.5 and 3 to 1.

10. A method of converting 2D image into 3D image comprising:

   - generating a depth map made up of depth information having 0 or 1 from a 2D input image using brightness of pixels in the input image; and
   - generating a left eye image or a right eye image by parallax-processing the input image through the generated depth map, wherein a first pixel when parallax-processing to the right eye image is delayed in the right direction by applying positive parallax to the first pixel, and a second pixel when parallax-processing to the left eye image is delayed in the left direction by applying negative parallax to the second pixel.

11. The method of claim 10, wherein a pixel value of a delay pixel is substituted for a pixel value of a pixel to be processed at present by considering depth information of N (is integer of above 2) pixels including the pixel to be processed at present in the parallax-processing, and wherein the delay pixel is determined in accordance with arrangement of the depth information of the N pixels, and the delay pixel means a pixel located before the pixel to be processed at present by M (is an integer of above 0) pixel.

12. The method of claim 11, wherein a first parallax-processing rule for selecting the delay pixel when the parallax-processing to the left eye image is different from a second parallax-processing rule for selecting the delay pixel when the parallax-processing to the right eye image in view of the same arrangement of the depth information, and wherein the input image is parallax-processed in accordance with the arrangement of the depth information for the N pixels.

13. The method of claim 11, wherein the step of generating the depth map includes:

   - converting pixel values of pixels in the input image into brightness values;
   - sampling pixels in the brightness image with constant interval, thereby generating a sample image;
   - calculating total average brightness $\mu_{TOTAL}$ of the sample image;
   - dividing the sample image into an upper part and a lower part, and calculating average brightness $\mu_{PART}$ of the upper part; and
   - generating the depth information for the pixels in the input image by using the total average brightness $\mu_{TOTAL}$ and the average brightness $\mu_{PART}$ of the upper part, wherein under the condition that the total average brightness $\mu_{TOTAL}$ is more than the average brightness $\mu_{PART}$, the depth information of the pixel is 0 in case that brightness $S_Y(i,j)$ of the pixel is more than the total average brightness $\mu_{TOTAL}$, and is 1 in case that the brightness $S_Y(i,j)$

of the pixel is smaller than the total average brightness $\mu_{TOTAL}$, under the condition that the total average brightness $\mu_{TOTAL}$ is smaller than the average brightness $\mu_{PART}$, the depth information of the pixel is 0 in case that brightness $S_\gamma(i,j)$ of the pixel is smaller than the total average brightness $\mu_{TOTAL}$, and is 1 in case that the brightness $S_\gamma(i,j)$ of the pixel is more than the total average brightness $\mu_{TOTAL}$.

**14.** The method of claim 13, wherein the step of generating the depth map further includes:

- in case that brightness difference between a specific pixel and next pixel is higher than preset level, setting the depth information of every pixel located after the specific pixel by D (is a positive integer) pixels to 0 or 1;
- dividing the depth information having 0 or 1 into 0, 1, 2, and 3;
- smoothing depth information having 0, 1, 2 and 3 using a mask; and
- resetting depth information of a pixel having the depth information between 0 and 1.5 to 0 and resetting depth information of a pixel having the depth information between 1.5 and 3 to 1.

**15.** The method of claim 1 or 11, wherein depth information corresponding to a caption in the input image is reset to 1 only in case that the depth information having 1 is successively arrayed by above preset number.

**16.** An apparatus for converting 2D image into 3D image comprising:

- a brightness conversion section configured to convert a 2D input image having pixel values into a brightness image having brightness values;
- a depth map section configured to generate a depth map having depth information from the brightness image; and
- a reproduction image section configured to generate at least one of a left eye image, a right eye image and a reproduction image by first parallax processing the input image using the generated depth map.

**17.** The apparatus of claim 16, wherein the reproduction image section delays a first pixel in the right direction by applying positive parallax to the first pixel when parallax-processing the right eye image, and delays a second pixel in the left direction by applying negative parallax to the second pixel when parallax-processing the left eye image.

**18.** The apparatus of claim 17, wherein the reproduction image section substitutes pixel value of a delay pixel for a pixel value of a pixel to be processed at present by considering depth information of N (is an integer of above 2) pixels including the pixel to be processed at present in the parallax-processing, and wherein the delay pixel is determined in accordance with arrangement of the depth information of the N pixels, and the delay pixel means a pixel located before the pixel to be processed at present by M (is integer of above 0) pixel.

**19.** The apparatus of claim 18, wherein a first parallax-processing rule for selecting the delay pixel when the parallax-processing to the left eye image is different from a second parallax-processing rule for selecting the delay pixel when the parallax-processing to the right eye image in view of the same arrangement of the depth information, and wherein the input image is parallax-processed in accordance with the arrangement of the depth information for the N pixels.

**20.** The apparatus of claim 16, wherein the brightness conversion section converts pixel values of pixels in the input image into brightness values, and the depth map section includes:

- a sampling section configured to sample pixels in the brightness image with constant interval, thereby generating a sample image;
- a brightness calculation section configured to calculate total average brightness $\mu_{TOTAL}$ of the sample image, divide the sample image into an upper part and a lower part, and calculate average brightness $\mu_{PART}$ of the upper part; and
- a depth map generating section configured to generate the depth information for the pixels in the input image by using the total average brightness $\mu_{TOTAL}$ and the average brightness $\mu_{PART}$ of the upper part, and wherein under the condition that the total average brightness $\mu_{TOTAL}$ is more than the average brightness $\mu_{PART}$, the depth information of the pixel is 0 in case that brightness $S_\gamma(i,j)$ of the pixel is more than the total average brightness $\mu_{TOTAL}$, and is 1 in case that the brightness $S_\gamma(i,j)$ of the pixel is smaller than the total average brightness $\mu_{TOTAL}$, under the condition that the total average brightness $\mu_{TOTAL}$ is smaller than the average brightness $\mu_{PART}$ the depth information of the pixel is 0 in case that brightness $S_\gamma(i,j)$ of the pixel is smaller than the total average brightness $\mu_{TOTAL}$, and is 1 in case that the brightness $S_\gamma(i,j)$ of the pixel is more than the

total average brightness $\mu_{TOTAL}$.

21. The apparatus of claim 20, wherein the depth map generating section sets the depth information of pixels located after a specific pixel by D (is a positive integer) pixel to 0 or 1 in case that brightness difference between the specific pixel and next pixel is higher than preset level.

22. The apparatus of claim 20, wherein the depth map generating section divides the depth information having 0 or 1 into 0, 1, 2, and 3, smoothes depth information having 0, 1, 2 and 3 using a mask, resets depth information of a pixel having the depth information between 0 and 1.5 to 0, and resets depth information of a pixel having the depth information between 1.5 and 3 to 1.

23. The apparatus of claim 20, wherein the depth map generating section resets depth information corresponding to a caption in the input image to 1 only in case that the depth information having 1 is successively arrayed by above preset number.

24. The apparatus of claim 16, wherein the right eye image is delayed in the right direction for only a background area to apply positive parallax to the first pixel and the left eye image is delayed in the left direction for only the object area to apply negative parallax to the second pixel.

EP 2 398 247 A2

```
        ┌─────────────┐
        │    start    │
        └──────┬──────┘
               │
               ▼
   ┌───────────────────────┐
   │ converting to brightness│──────────S100
   └───────────┬───────────┘
               │
               ▼
   ┌───────────────────────┐
   │ obtaining a sample image│──────────S102
   └───────────┬───────────┘
               │
               ▼
   ┌───────────────────────┐
   │ generating a depth map  │──────────S104
   └───────────┬───────────┘
               │
               ▼
   ┌───────────────────────┐
   │  parallax-processing    │──────────S106
   └───────────┬───────────┘
               │
               ▼
        ┌─────────────┐
        │     end     │
        └─────────────┘
```

# FIGURE 1

**FIG. 2**

**FIG. 3**

start

converting to brightness — S400

obtaining a sample image — S402

detecting motion and dividing into areas — S404

generating a first depth map considering a boundary — S406

generating a second depth map by object-synthesizing and noise removing — S408

parallax-processing — S410

end

# FIG. 4

16       504       16       506

| Y2 | Y1 | Y0 | 1 | 1 | 1 | 1 | Y2 | Y1 | Y0 | 0 | 0 | 0 | 0 |

502     500

**FIG. 5**

| 1 | 1 | 1 | 1 | 1 | 1 | 1 | 1 | 1 |
|---|---|---|---|---|---|---|---|---|
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |

600

**FIG. 6**

<input image>

<depth information for an image that object -
synthesizing and noise removing are not applied>

<depth information for an image that object -
synthesizing and noise removing are applied>

# FIG. 7

**800**

810

816

812 — storage section

controller

sampling section — 820

brightness calculation section — 822

depth map generating section — 824

814 — brightness conversion section

reproduction image section — 818

# FIG. 8